# EUROPEAN PATENT APPLICATION

(11) **EP 2 445 248 A1**
(43) Date of publication of application: **25.04.2012**
(21) Application number: 10788937.0
(22) Date of filing: 17.06.2010
(51) Int. Cl.: H04W 24/10

(54) **METHOD AND DEVICE FOR REPORTING OR ACQUIRING NEIGHBOR INFORMATION**

(30) Priority: 17.06.2009 CN 200910146873
(71) Applicant: Huawei Technologies Co., Ltd., Shenzhen, Guangdong 518129 (CN)
(72) Inventor: TANG, Xiaowei, Shenzhen Guangdong 518129 (CN)
(74) Representative: Charles, Glyndwr
(86) International application number: PCT/CN2010/073992
(87) International publication number: WO 2010/145541

(57) **Abstract**

The present invention provides a neighbor cell information reporting method, a neighbor cell information obtaining method, and a neighbor cell information obtaining device. The neighbor cell information reporting method includes: receiving a Measurement configuration (Mc) request delivered by an Evolved Node B (eNB), where the Mc request includes configured neighbor cell information; when a discovered neighbor cell is identified as a self-discovered neighbor cell according to the configured neighbor cell information, obtaining Global Cell Identification (GCI) information of the self-discovered neighbor cell; and reporting the GCI information of the self-discovered neighbor cell to the eNB. Through the present invention, the number of delivery times of the Mc request is decreased, and a handover delay is reduced.

## Description

This application claims priority to Chinese Patent Application No. 200910146873.2, filed with the Chinese Patent Office on June 17, 2009 and entitled "METHOD FOR REPORTING NEIGHBOR CELL INFORMATION, METHOD AND DEVICE FOR OBTAINING NEIGHBOR CELL INFORMATION", which is incorporated herein by reference in its entirety.

### FIELD OF THE INVENTION

The present invention relates to a wireless communication technology, and in particular to a method for reporting a self-discovered neighbor cell, a method and device for obtaining a self-discovered neighbor cell.

### BACKGROUND OF THE INVENTION

In a wireless communication system, dynamic maintenance of a neighbor relation may be implemented through an automatic neighbor relation (ANR). The ANR refers to automatic identification of a neighbor cell through a base station (evolved node B, eNB) and automatic configuration of a neighbor relation. At present, an ANR function is gradually developed to become content of a Long Term Evolution (LTE) standard protocol, and is mainly used to prevent neighbor cell missing and reduce probabilities of occurrence of abnormal neighbor cell handover and conflict with physical identity (PHY_ID) of a neighbor cell in the neighbor relation, thus improving a handover success ratio.

When a terminal (user equipment, UE) accesses a base station to perform service change and neighbor handover, the base station needs to measure channel quality of a neighbor cell of a current serving cell to decide a handover target. At this time, the base station delivers an event-type measurement configuration (Mc) request to request the UE to report information of an optimal neighbor cell. The UE reports PHY_ID (which is a physical address, or may be referred to as a physical ID) information of the optimal neighbor cell (a neighbor cell with a best measurement index value) through a measurement report. When performing cell handover, the base station needs a PHY_ID of a target cell and corresponding global cell identification (GCI) information. In order to obtain GCI information corresponding to a PHY_ID of a configured neighbor cell, a neighbor relation list, namely, a relationship list of PHY_ID of the configured neighbor cell and the corresponding GCI of the configured neighbor cell, is maintained on the base station. For neighbor cell information reported by the UE, the base station queries the existing neighbor relation list for the neighbor GCI information reported by the UE, and performs a handover process after finding the corresponding GCI information. When the UE starts the ANR function, a neighbor cell reported by the UE to the base station in the measurement report may not be a neighbor configured in the neighbor relation list of the base station in network planning; but instead, may be a self-discovered neighbor cell of the UE. For the self-discovered neighbor cell of the UE, the base station cannot find GCI information corresponding to the self-discovered neighbor cell of the UE through querying the existing neighbor relation list. If the cell handover needs to be performed at this time, the base station further needs to deliver an ANR Mc request according to a PHY_ID of a newly-discovered cell (namely, the self-discovered neighbor cell of the UE), and notify the UE of reporting GCI information corresponding to the self-discovered neighbor cell. The ANR Mc request is sent periodically, and is sent only when the base station cannot obtain the cell GCI information reported by the UE, or when a conflicting cell exists. The base station can perform a subsequent handover process only after obtaining the GCI information reported by the UE.

During an implementation process of the present invention, the inventor finds that the prior art at least has the following problems: In the prior art, two times of measurement (event type measurement and ANR periodical measurement) need to be performed on a newly-discovered cell before a handover process is finally performed, and therefore, the handover cannot be continued until an ANR measurement result is reported, which affects timeliness of the handover and wastes air interface resources to some extent.

For handover of different frequencies in a system or handover of different systems, apart from the foregoing problems, when ARN measurement is performed, whether reporting of an ANR measurement report is timely is also influenced by a GAP measurement period configured in a current system, thus further causing a handover delay.

### SUMMARY OF THE INVENTION

Embodiments of the present invention mainly aim at providing a neighbor cell information reporting method, which may solve a problem that, after a UE reports a self-discovered neighbor cell, a base station needs to re-deliver ANR measurement to obtain GCI information of the self-discovered neighbor cell before starting to execute a handover process.

Accordingly, the embodiments of the present invention further provide a terminal.

The embodiments of the present invention also aim at providing a neighbor cell information obtaining method.

Accordingly, the embodiments of the present invention further provide a neighbor cell information obtaining device.

In order to achieve the foregoing objectives, an embodiment of the present invention provides a neighbor cell information reporting method, including:
receiving an Mc request delivered by a base station, where the Mc request includes configured neighbor cell information;
when a discovered neighbor cell is identified as a self-discovered neighbor cell according to the configured neighbor cell information, obtaining GCI information of the self-discovered neighbor; and
reporting the GCI information of the self-discovered neighbor cell to the base station.

An embodiment of the present invention further provides a neighbor cell information reporting method, including:
receiving an Mc request delivered by a base station, where the Mc request includes configured neighbor cell information and a GCI reporting indication;
if the GCI reporting indication is a GCI reporting indication of a self-discovered neighbor cell, obtaining and reporting GCI information of a self-discovered neighbor cell to the base station when a discovered neighbor cell is identified as the self-discovered neighbor cell according to the configured neighbor cell information; or
if the GCI reporting indication is a GCI reporting indication of all neighbor cells, obtaining and reporting GCI information of all discovered neighbor cells to the base station; or
if the GCI reporting indication is a GCI reporting indication of an optimal neighbor cell, obtaining and reporting GCI information of a neighbor cell with best communication quality among discovered neighbor cells to the base station.

An embodiment of the present invention further provides a neighbor cell information obtaining method, including:
delivering an Mc request, where the Mc request carries a GCI reporting indication and configured neighbor cell information; and
receiving a measurement report reported by a terminal, where the measurement report carries GCI information of a neighbor cell, and the GCI information of the neighbor cell is reported by the terminal according to the GCI reporting indication; or the measurement report carries a self-discovered neighbor cell identified by the terminal according to the configured neighbor cell information and GCI information of the self-discovered neighbor cell, where the GCI information of the self-discovered neighbor cell is reported by the terminal according to the GCI reporting indication.

An embodiment of the present invention further provides a neighbor cell information obtaining method, including:
delivering an Mc request, where the Mc request carries configured neighbor cell information, so that a terminal judges, according to the configured neighbor cell information, whether a neighbor cell discovered by the terminal is a self-discovered neighbor cell; and
receiving a measurement report reported by the terminal, where the measurement report carries GCI information of the self-discovered neighbor cell identified by the terminal according to the configured neighbor cell information, or the measurement report carries GCI information and a PHY_ID of the self-discovered neighbor cell identified by the terminal according to the configured neighbor cell information.

An embodiment of the present invention further provides a terminal, including:
a receiving unit, configured to receive an Mc request delivered by a base station, where the Mc request includes configured neighbor cell information and a GCI reporting indication;
an identifying unit, configured to identify, according to the configured neighbor cell information, whether a discovered neighbor cell is a self-discovered neighbor cell;
a first obtaining unit, configured to, when the GCI reporting indication is a GCI reporting indication of a self-discovered neighbor cell, and the identifying unit identifies the discovered neighbor cell as a self-discovered neighbor cell, obtain GCI information of the self-discovered neighbor cell; and
a reporting unit, configured to report the GCI information of the self-discovered neighbor cell to the base station, or configured to report the GCI information and a PHY_ID of the self-discovered neighbor cell.

An embodiment of the present invention further provides a terminal, including:
a receiving unit, configured to receive an Mc request delivered by a base station, where the Mc request includes configured neighbor cell information;
an identifying unit, configured to identify, according to the configured neighbor cell information, whether a discovered neighbor cell is a self-discovered neighbor cell;
an obtaining unit, configured to, when the identifying unit identifies the discovered neighbor cell as a self-discovered neighbor cell, obtain GCI information of the self-discovered neighbor cell; and
a reporting unit, configured to report the GCI information of the self-discovered neighbor cell to the base station, or report the GCI information and a PHY_ID of the self-discovered neighbor cell to the base station.

An embodiment of the present invention further provides a neighbor cell information obtaining device, including:
a sending unit, configured to deliver an Mc request, where the Mc request carries a GCI reporting indication; and
an obtaining unit, configured to receive a measurement report reported by a terminal, where the measurement report carries GCI information of a neighbor cell, and the GCI information of a neighbor cell is reported by the terminal according to the GCI reporting indication, or the measurement report carries GCI information and a PHY_ID of a neighbor cell, where the GCI information and a PHY_ID of a neighbor cell are reported by the terminal according to the GCI reporting indication.

An embodiment of the present invention further provides a neighbor cell information obtaining device, including:
a sending unit, configured to deliver an Mc request, where the Mc request carries configured neighbor cell information; and
an obtaining unit, configured to receive a measurement report reported by a terminal, where the measurement report carries GCI information of a self-discovered neighbor cell identified by the terminal according to the configured neighbor cell information, or the measurement report carries GCI information and a PHY_ID of a self-discovered neighbor cell identified by the terminal according to the configured neighbor cell information.

A beneficial effect of the embodiments of the present invention lies in that, by adding a GCI reporting indication in an Mc request information element to instruct a UE to report GCI information of a corresponding cell according to a requirement of a base station, the base station does not need to re-deliver an ANR periodical Mc request after receiving a measurement report, thus decreasing the number of delivery times of the Mc request and reducing a handover delay.

### BRIEF DESCRIPTION OF THE DRAWINGS

Accompanying drawings described here are provided for further understanding of the present invention, which construct part of the application, but are not constructed as limitations to the present invention. In the accompanying drawings:

FIG. 1 is a flow chart about obtaining neighbor cell information according to an embodiment of the present invention;

FIG. 2 is a flow chart about reporting neighbor cell information according to an embodiment of the present invention;

FIG. 3 is a flow chart of interactions between a UE and a base station during neighbor handover according to an embodiment of the present invention;

FIG. 4 is a schematic diagram of interactions between a UE and a base station that correspond to FIG. 3;

FIG. 5 is a structural block diagram of a UE according to an embodiment of the present invention;

FIG. 6 is a structural block diagram of a base station according to an embodiment of the present invention; and

FIG. 7 is another structural block diagram of a UE according to an embodiment of the present invention.

### DETAILED DESCRIPTION OF THE EMBODIMENTS

In order to make the objectives, technical solutions, and advantages of the present invention clearer, specific embodiments of the present invention are described in detail with reference to the accompanying drawings in the following. The exemplary embodiments of the present invention and descriptions of the exemplary embodiments are merely for illustrating the present invention, and are not constructed as limitations to the present invention.

### Embodiment 1

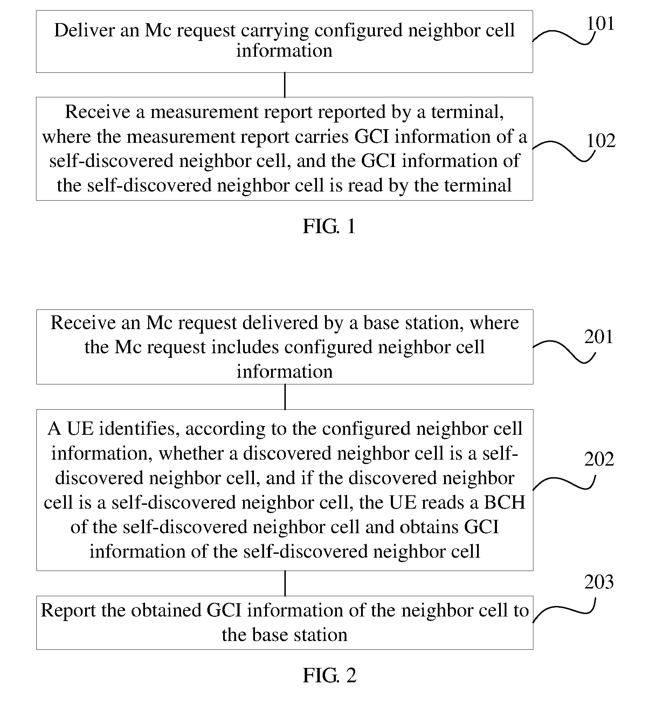

In an embodiment of the present invention, as shown in FIG. 1, a neighbor cell information obtaining method of a base station includes:

Step 101: A base station delivers an Mc request carrying configured neighbor cell information.

The configured neighbor cell information may be a neighbor relation list maintained by the base station, or may be a neighbor PHY_ID maintained by the base station.

The base station sends the configured neighbor cell information to a UE, so that the UE may identify a property of a neighbor cell. That is, if the configured neighbor cell information does not include related information of a neighbor cell, where the related information of a neighbor cell is read by the UE (such as PHY_ID or GCI information corresponding to the PHY_ID), it indicates that the neighbor cell is a self-discovered neighbor cell. At this time, the UE obtains a PHY_ID of the neighbor cell and corresponding GCI information of the neighbor cell, and sends the obtained PHY_ID of the neighbor cell and the corresponding GCI information of the neighbor cell to the base station.

Step 102: The base station receives a measurement report reported by a terminal, where the measurement report carries GCI information of a self-discovered neighbor cell, and the GCI information of the self-discovered neighbor cell is reported by the terminal.

Through the foregoing steps, the base station may obtain the GCI information of the self-discovered neighbor cell by sending the Mc request, and does not need to re-deliver an ANR periodical Mc request, thus decreasing the number of delivery times of the Mc request, saving handover steps, and reducing a handover delay.

Optionally, in step 101, the Mc request delivered by the base station may also include the configured neighbor cell information and a GCI reporting indication, where the GCI reporting indication is used to instruct the terminal to read corresponding GCI information. Correspondingly, in step 102, the measurement report received by the base station carries the GCI information of the neighbor cell, where the GCI information of the neighbor cell is to be reported by the GCI reporting indication. In this way, the base station may obtain the GCI information of the neighbor cell, where the GCI information of the neighbor cell is to be reported by indication, and does not need to re-deliver the ANR periodical Mc request, thus decreasing the number of delivery times of the Mc request and reducing the handover delay.

The GCI reporting indication includes the following three types:

(1) The GCI reporting indication is all (all), which indicates that the UE reports the read GCI information of every measured neighbor cell, and the GCI reporting indication of this type may be used at an early stage of network construction.

(2) The GCI reporting indication is a self-discovered neighbor cell (onlyanr), which indicates that the UE reports the read GCI information of the self-discovered neighbor cell.

(3) The GCI reporting indication is a best neighbor cell (strongest), which indicates that the UE only reports the read GCI information of the neighbor cell with best quality.

In this way, the terminal may report the GCI information indicated by the GCI reporting indication to the base station, and the base station does not need to re-deliver the ANR periodical Mc request, thus decreasing the number of delivery times of the Mc request and reducing the handover delay.

### Embodiment 2

Accordingly, as shown in FIG. 2, a neighbor cell information reporting method of a terminal includes:

Step 201: Receive an Mc request delivered by a base station, where the Mc request includes configured neighbor cell information.

Step 202: When a discovered neighbor cell is identified as a self-discovered neighbor cell according to the configured neighbor cell information, obtain GCI information of the self-discovered neighbor cell.

Specifically, a UE first identifies, according to configured neighbor cell information, whether a discovered neighbor cell is a self-discovered neighbor cell; and if the discovered neighbor cell is a self-discovered neighbor cell, the UE reads a broadcast channel (BCH) of the self-discovered neighbor cell and obtains GCI information of the self-discovered neighbor cell.

Step 203: Report the obtained GCI information of the neighbor cell to the base station.

For example, the UE reports the GCI information of the self-discovered neighbor cell and PHY_ID information of the self-discovered neighbor cell to the base station through a measurement report.

After receiving the measurement report, the base station may identify the self-discovered neighbor cell according to the neighbor cell information reported by the UE, and then initiate a neighbor handover process according to the received GCI information of the neighbor cell; therefore, the base station does not need to re-deliver an ANR periodical Mc request. Compare with the prior art, the embodiment of the present invention decreases the number of delivery times of the Mc request and reduces a handover delay.

Optionally, in step 201, the received Mc request may also include the configured neighbor cell information and a GCI reporting indication, where the GCI reporting indication is used to instruct the terminal to read corresponding GCI information. Accordingly, in step 202, the terminal reads a BCH of a neighbor cell according to the GCI reporting indication and obtains GCI information of the corresponding neighbor cell. The GCI reporting indication may be the GCI reporting indication in the foregoing first embodiment.

Specifically, if the GCI reporting indication is a GCI reporting indication of a self-discovered neighbor cell, namely, indicates to reporting the GCI information of a self-discovered neighbor cell, the UE may identify, according to the configured neighbor cell information, a property of a discovered neighbor cell (for example, whether the discovered neighbor cell is a self-discovered neighbor cell). If the discovered neighbor cell is identified as a self-discovered neighbor cell, the UE reads a BCH of the self-discovered neighbor cell and obtains GCI information of the self-discovered neighbor cell; if the GCI reporting indication is a GCI reporting indication of all neighbor cells, the UE reports GCI information of all measured neighbor cells; and if the GCI reporting indication is a GCI reporting indication of a neighbor cell with best quality, the UE reports GCI information of a measured neighbor cell with the best quality.

In this way, the terminal may report the GCI information indicated by the GCI reporting indication to the base station, and the base station does not need to re-deliver the ANR periodical Mc request, thus decreasing the number of delivery times of the Mc request and reducing the handover delay.

### Embodiment 3

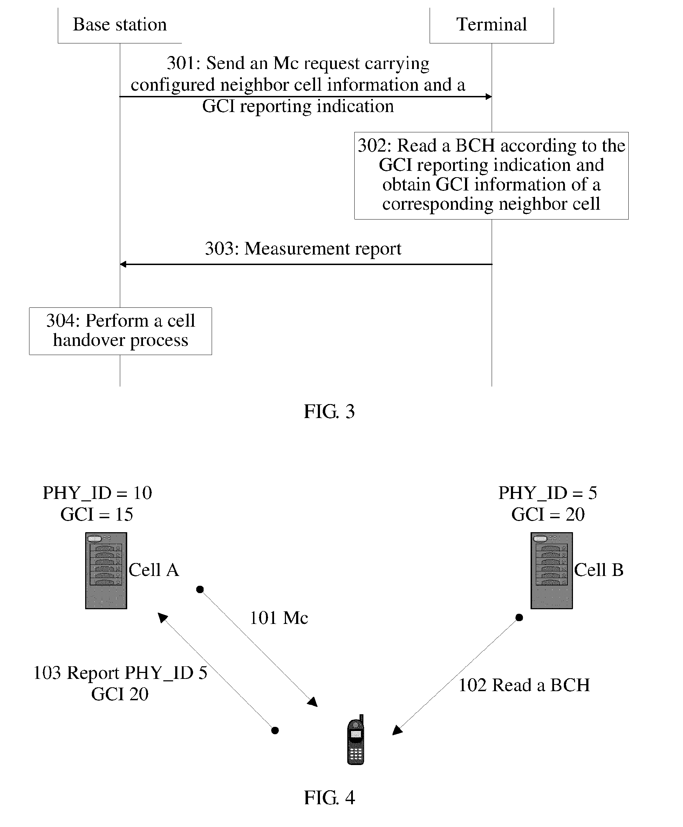

FIG. 3 is a flow chart of interactions between a base station and a terminal during neighbor handover according to this embodiment, and FIG. 3 is a schematic diagram of interactions between the corresponding base station and terminal. An interaction process between a base station and a terminal includes:

Step 301: A base station, to which a current cell A belongs, delivers an event-type Mc request to a UE, where the Mc request carries a GCI reporting indication and configured neighbor cell information (such as a configured neighbor relation list).

The GCI reporting indication is used to instruct the UE to report GCI information of a specified neighbor cell, where the specified neighbor cell may be a self-discovered neighbor cell, all neighbor cells or a neighbor cell with best quality, and the all neighbor cells or the neighbor cell with the best quality are measured by the UE. Here, when the specified neighbor cell is a self-discovered neighbor cell, the GCI reporting indication is referred to as a GCI reporting indication of a self-discovered neighbor cell; when the specified neighbor cell is all neighbor cells, the GCI reporting indication is referred to as a GCI reporting indication of all neighbor cells; and when the specified neighbor cell is a neighbor cell with the best quality, the GCI reporting indication is referred to as a GCI reporting indication of an optimal neighbor cell.

The GCI reporting indication may be set in an indication information element (such as a reportInd information element), and the indication information element may be carried in the Mc request delivered by the base station.

Step 302: The UE receives the Mc request delivered by the base station, and reads GCI information of a corresponding neighbor cell according to the GCI reporting indication in the request.

Specifically, if the GCI reporting indication in the Mc request is a GCI reporting indication of a self-discovered neighbor cell, namely, indicates to report the GCI information of a self-discovered neighbor cell, the UE may identify, according to the configured neighbor cell information, a property of a discovered neighbor cell (for example, whether the discovered neighbor cell is a self-discovered neighbor cell). If the discovered neighbor cell is identified as a self-discovered neighbor cell, the UE reads a BCH of the self-discovered neighbor cell and obtains GCI information of the self-discovered neighbor cell; if the GCI reporting indication is a GCI reporting indication of all neighbor cells, the UE reports GCI information of all measured neighbor cells; and if the GCI reporting indication is a GCI reporting indication of a neighbor cell with the best quality, the UE reports GCI information of a measured neighbor cell with the best quality.

For example, when the UE discovers that a neighbor cell is a PHY_ID 5, after receiving the Mc request delivered by the base station, the UE identifies the PHY_ID 5 is a self-discovered neighbor cell through traversing the configured neighbor cell information in the Mc request. Moreover, the UE decides, according to the GCI reporting indication in the Mc request, whether to obtain GCI information of the PHY_ID 5 through a BCH of the neighbor cell.

When the GCI reporting indication is the GCI reporting indication of all neighbor cells, that is, the GCI reporting indication is set to all, the UE reads GCI information of every measured neighbor cell. When the GCI reporting indication is the GCI reporting indication of a self-discovered neighbor cell, that is, the GCI reporting indication is set to reportGCI, the UE reads the GCI information of a self-discovered neighbor cell. When the GCI reporting indication is the GCI reporting indication of a neighbor cell with the best quality, that is, the GCI reporting indication is set to reportStrongestCells, the UE reads GCI information of a measured neighbor cell with the best quality.

Optionally, during a specific implementation process, in step 301, the base station may also deliver an Mc request only carrying the configured neighbor cell information. In this way, the UE may also identify a property of a neighbor cell according to the received configured neighbor cell information, namely, identify whether the neighbor cell is a self-discovered neighbor cell. When the UE identifies the neighbor cell as a self-discovered neighbor cell, the UE reads a BCH of the self-discovered neighbor cell, obtains GCI information of the self-discovered neighbor cell, and step 303 is executed.

Step 303: The UE sends a measurement report to the base station to report PHY_ID of the corresponding neighbor cell and GCI information of the corresponding neighbor cell.

For example, if the GCI reporting indication is all, the UE reports GCI information of all measured neighbor cells to the base station; if the GCI reporting indication is reportGCI, the UE reports GCI information of a self-discovered neighbor cell to the base station, namely, the GCI information including the PHY_ID 5; and if the GCI reporting indication is reportStrongestCells, the UE reports GCI information of a measured neighbor cell with the best quality to the base station.

Step 304: The base station receives the measurement report from the UE.

If the measurement report from the UE includes the PHY_ID 5 of the self-discovered neighbor cell and GCI information of the self-discovered neighbor cell, the base station identifies the neighbor PHY_ID 5 as a self-discovered neighbor cell according to the configured neighbor cell information, and initiates a handover process according to the GCI information of the neighbor PHY_ID 5; therefore, an ANR periodical Mc request does not need to be re-delivered.

If the measurement report from the UE includes the GCI information of the neighbor cell with the best quality, the base station may use the neighbor cell as a target neighbor cell to initiate a handover process.

Even if the measurement report carries the GCI information of all neighbor cells, because the UE reports reference signal received power (RSRP) and reference signal received quality (RSRQ) of the current cell to the base station when reporting a cell, the base station may evaluate quality of a cell comprehensively through the two types of indications, sequence cells according to service quality before handover, and decide a target cell of the handover according to communication quality.

In order to implement the foregoing step, the embodiment of the present invention modifies an existing protocol corresponding to Mc request delivery.

Content of the existing protocol of the Mc request delivery is shown as follows: ReportConfigEUTRA information element (Evolved Universal Terrestrial Radio Access (EUTRA) report configuration information element)

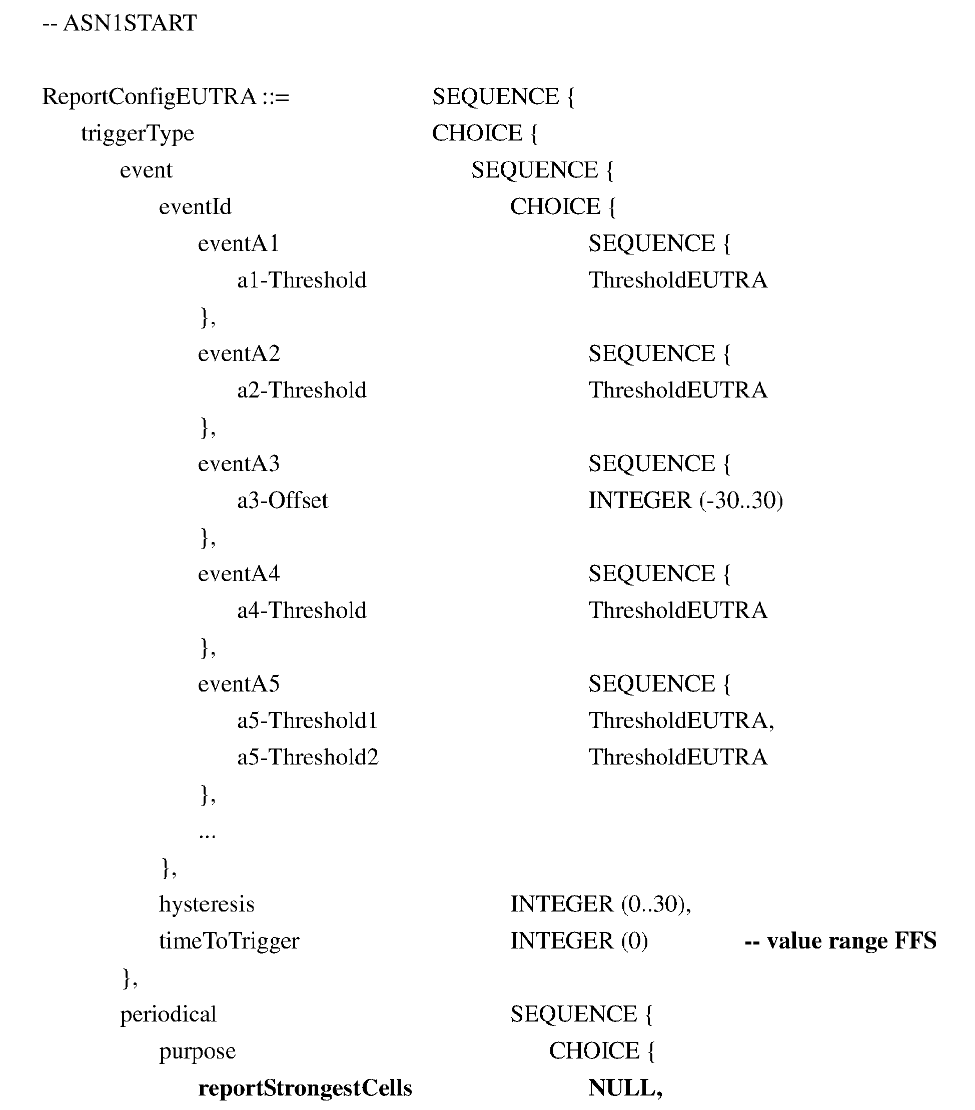

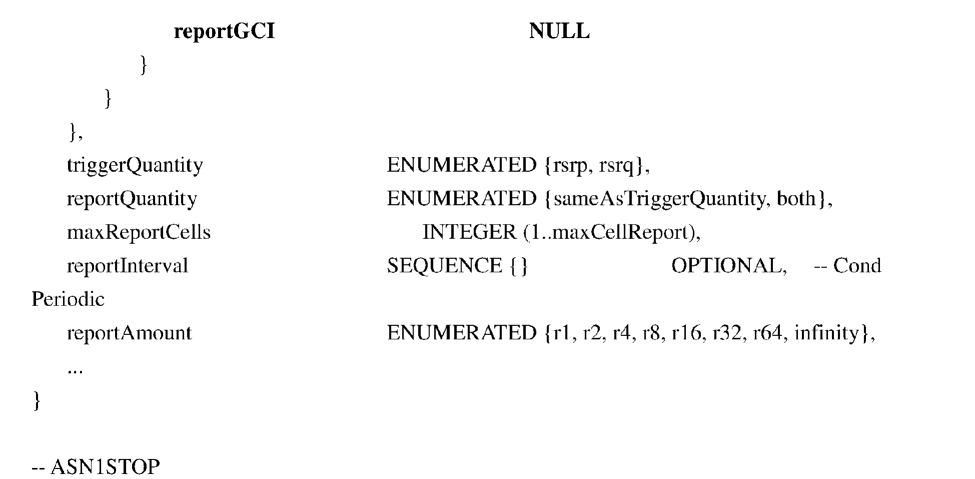

As shown in the foregoing protocol, when Mc triggerType is event, the existing protocol fails to report the GCI information in the measurement report. A GCI reporting option is only available when a periodical Mc request is delivered. Therefore, a solution in the prior art is that, if the UE reports a self-discovered neighbor cell, the base station needs to obtain GCI information of the self-discovered neighbor cell, which requires the base station to deliver an ANR periodical Mc request to trigger the UE to report the GCI information of the corresponding self-discovered neighbor cell.

The embodiment of the present invention modifies the content of the existing protocol of the Mc request delivery, and the modified content is as follows:
ReportConfigEUTRA information element (Evolved Universal Terrestrial Radio Access (EUTRA) report configuration information element)

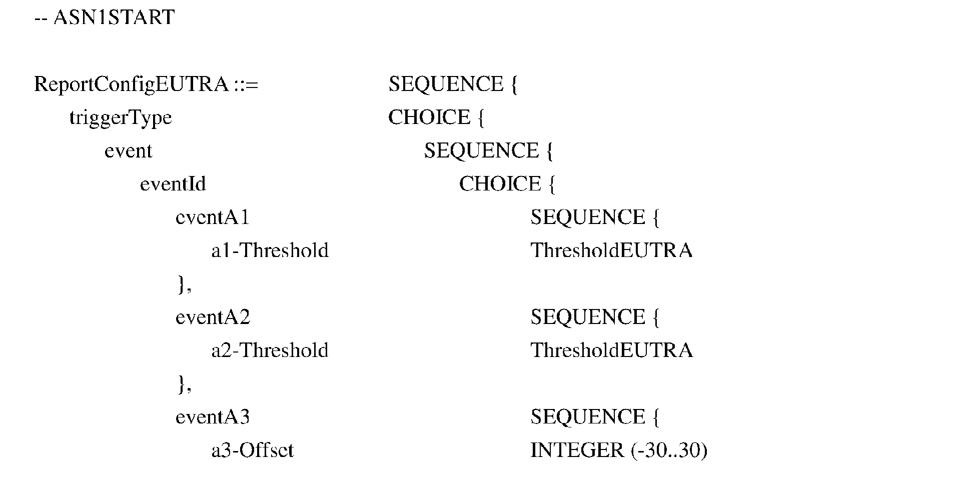

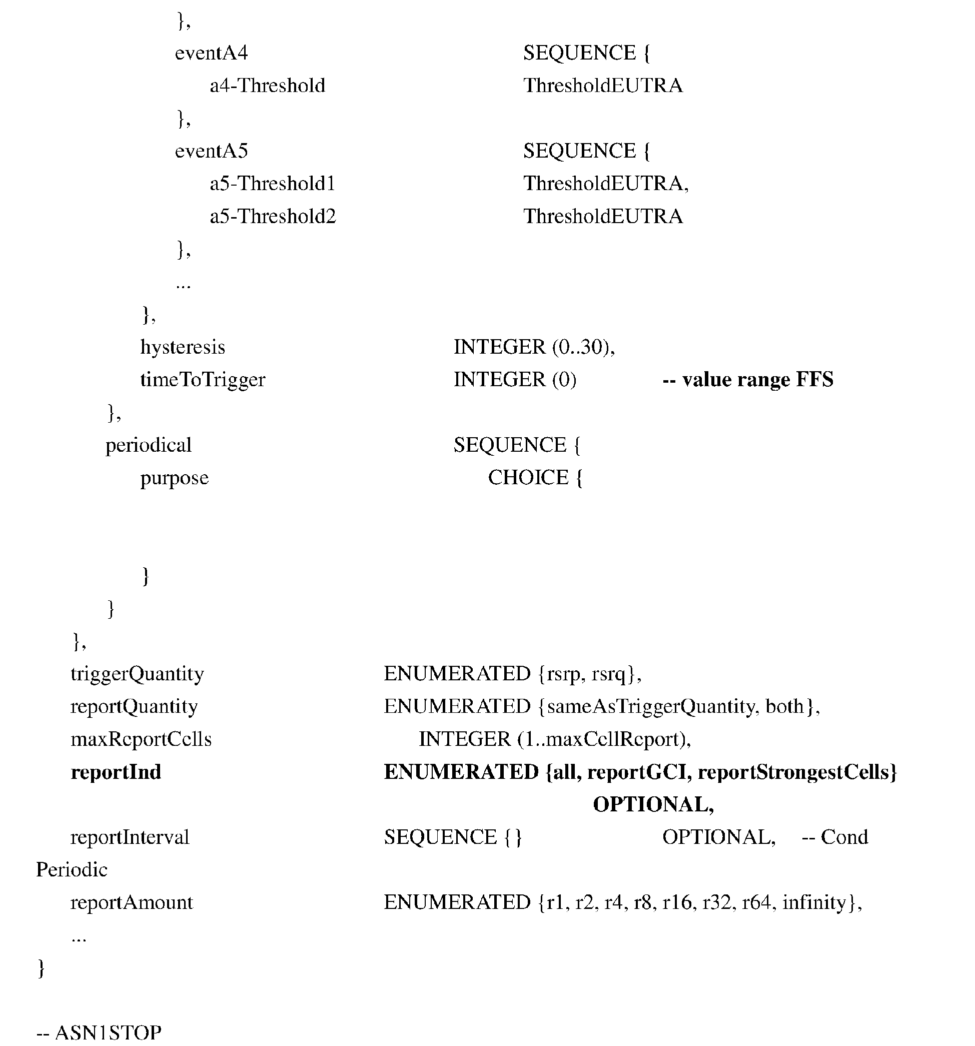

As shown above, in this embodiment, reportGCI and reportStrongestCells in the periodical Mc information element are extracted out of triggerType, and are set in a newly-added reportInd information element. In this way, the GCI reporting capability of the UE is no longer limited by Mc triggerType. For example, when delivering the Mc request, the communication quality of the self-discovered neighbor cell PHY_ID 5 of the UE is the best and an attribute of the reportInd information element is set to reportStrongestCells, so that the UE obtains GCI of the PHY_ID 5 through the BCH and fills the measurement report and reports to the base station, thus omitting a process of re-delivering the ANR periodical Mc request by the base station, and saving waiting time for a subsequent handover process.

In the modified Mc delivery protocol in the embodiment of the present invention, the reportInd information element is an optional information element in the event-type Mc, and is not a mandatory information element. If the event-type Mc does not include the reportInd information element, and the UE reports the self-discovered neighbor cell, the base station still needs to deliver a periodical Mc. In order to use the reportGCI information element during a periodical measurement process without affecting specifications of the original protocol, it is stipulated in this embodiment that, when periodical measurement is performed, the reportInd information element should be carried.

For the UE, a related protocol corresponding to reporting the GCI through the measurement report is described as follows:
MeasuredResults information element (measurement result information element) -- ASN1START

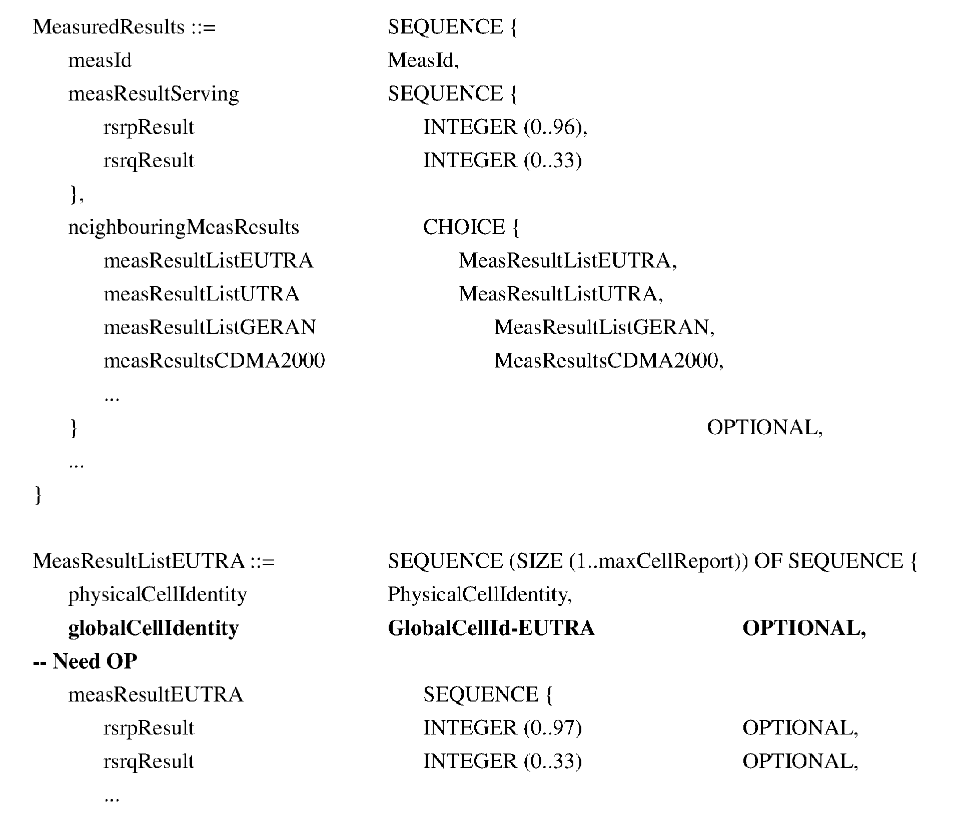

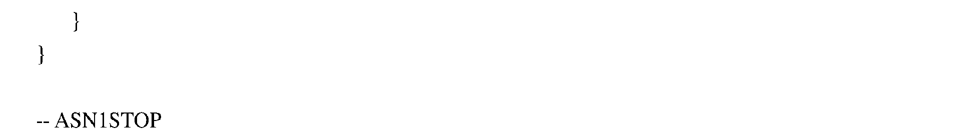

In the protocol, a globalCellIdentity information element is an optional field. That is, only when the UE receives the periodical Mc request, the UE selects corresponding GCI information for reporting according to an attribute reportStrongestCells or reportGCI in the periodical Mc information element. When the event-type Mc is performed, because these attributes cannot be selected, it is failed to require the UE to report the corresponding GCI information. If the base station uses the Mc delivery protocol according to the embodiment of the present invention, the UE may dynamically select, according to an indication of the reportInd information element of the Mc, a report action for the GCI information of the measured neighbor cell, namely, report the GCI information according to the indication of the reportInd information element, thus enhancing control capability of the base station over a UE action.

If the UE does not support the reportInd information element, the base station may perform identification through a measurement result reported by the UE. When identifying that the UE does not report the corresponding GCI information, the base station obtains the GCI information through delivering the ANR periodical Mc request.

In this embodiment, by adding a cell GCI reporting indication in an Mc request to instruct the UE to report, according to a requirement of the base station, GCI information of a corresponding cell, the base station does not need to re-deliver an ANR periodical Mc request after receiving a measurement report, thus decreasing the number of delivery times of the Mc request and reducing a handover delay.

### Embodiment 4

In this embodiment, interaction steps between a base station and a terminal before cell handover are the same as step 301 to step 304 in the third embodiment, and a difference lies in that, in this embodiment, based on an original Mc configuration protocol, an optional reportInd information element is added in event triggerType in an Mc configuration protocol, and protocol content is as follows:

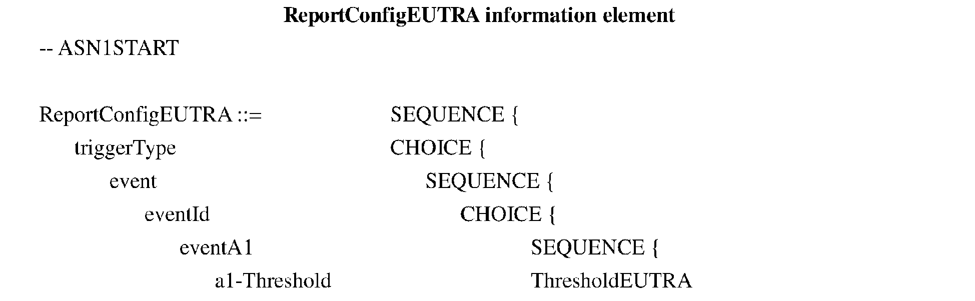

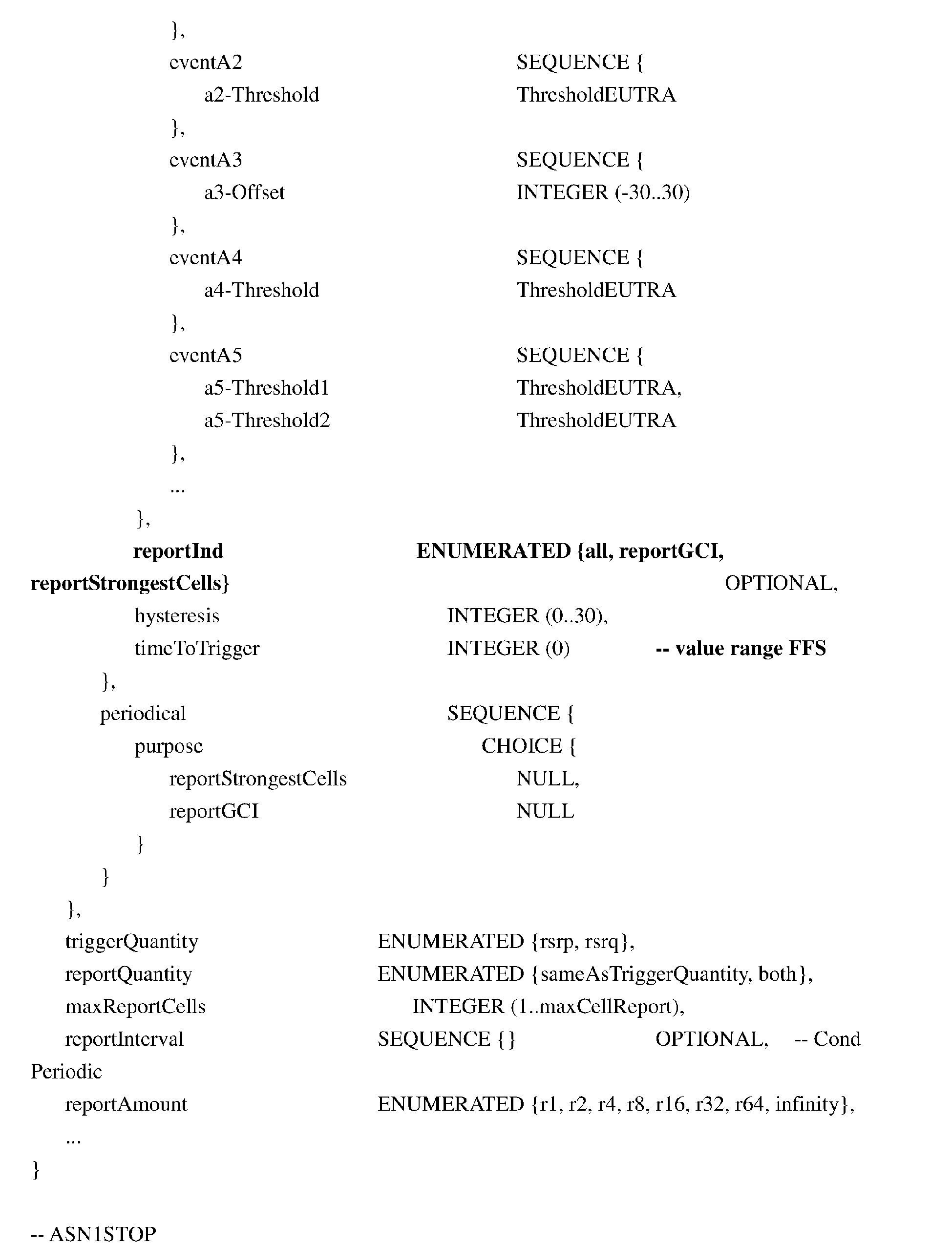

In this embodiment, when an Mc request with triggerType being event is delivered, an optional indication of the reportInd information element may be filled. In this way, the UE may operate according to the indication of the reportInd information element.

If the reportInd information element is filled as all, it indicates to report GCI information of all neighbor cells, and then the UE obtains GCI information of all measured neighbor cells and reports the GCI information of all measured neighbor cells through a measurement report.

If the reportInd information element is filled as reportGCI, it indicates to report GCI information of a self-discovered neighbor cell, and then the UE obtains GCI information of a measured self-discovered neighbor cell and reports the GCI information of a measured self-discovered neighbor cell through a measurement report.

If the reportInd information element is filled as reportStrongestCells, it indicates to report GCI information of a neighbor cell with best communication quality, and then the UE reports GCI information of a strongest neighbor cell among all measured neighbor cells.

When an Mc request with triggerType being periodical is delivered, reporting may be performed in a manner specified in the original protocol.

This embodiment aims at delivering an Mc request added with an event type when an implementation solution of the original protocol remains unchanged, so as to notify the UE of reporting corresponding GCI information. A UE that does not support the indication of the reportInd information element is not affected. The base station may automatically identify a reporting situation of neighbor cell information of the UE. If the UE does not report corresponding GCI information, the base station re-delivers an ANR periodical Mc request to obtain the GCI information.

Persons of ordinary skill in the art should understand that, all of or part of steps in the foregoing method embodiments may be implemented by a program instructing relevant hardware. The program may be stored in a computer readable storage medium, such as a ROM/RAM, a magnetic disk, and an optical disk.

### Embodiment 5

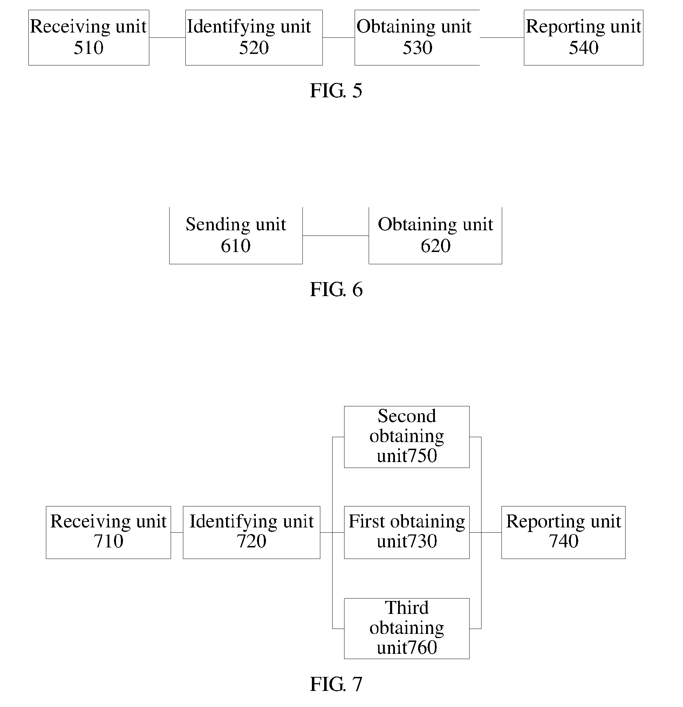

A terminal is further provided according to an embodiment of the present invention. FIG. 5 is a structural block diagram of the terminal, which includes the following parts:

A receiving unit 510 is configured to receive an Mc request delivered by a base station, where the Mc request includes configured neighbor cell information; and the configured neighbor cell information may be a neighbor relation list maintained by the base station, or may be a neighbor PHY_ID maintained by the base station.

An identifying unit 520 is connected to the receiving unit 510, and is configured to identify, according to the configured neighbor cell information, whether a discovered neighbor cell is a self-discovered neighbor cell. Specifically, if the configured neighbor cell information does not include related information of a discovered neighbor cell (for example, a PHY_ID or GCI information corresponding to the PHY_ID), it indicates that the neighbor is a self-discovered neighbor cell.

An obtaining unit 530 is connected to the identifying unit 520, and is configured to, when the identifying unit 520 identifies a discovered neighbor cell as a self-discovered neighbor cell, read a BCH of the self-discovered neighbor cell and obtain GCI information of the self-discovered neighbor cell.

A reporting unit 540 is connected to the obtaining unit 530, and is configured to report the obtained GCI information of the self-discovered neighbor cell to the base station according to the Mc request received by the receiving unit.

It can be seen from the foregoing description that, the receiving unit receives the configured neighbor cell information in the Mc request delivered by the base station, so that the identifying unit may identify the self-discovered neighbor cell according to the configured neighbor cell information, and report the obtained GCI information of the self-discovered neighbor cell to the base station. In this way, the base station does not need to re-deliver an ANR periodical Mc request. Compared with the prior art, the embodiment of the present invention may decrease the number of delivery times of the Mc request, thus reducing a handover delay.

### Embodiment 6

A base station is further provided according to an embodiment of the present invention. Optimally, the base station corresponds to the terminal in the foregoing fifth embodiment. FIG. 6 is a structural block diagram of the base station, where the base station includes the following parts:

A sending unit 610 is configured to send an Mc request, where the Mc request carries configured neighbor cell information; and the configured neighbor cell information may be a neighbor relation list maintained by the base station, or may be a neighbor PHY_ID maintained by the base station.

An obtaining unit 620 is configured to receive a measurement report reported by a terminal, where the measurement report carries GCI information of a self-discovered neighbor cell identified by the terminal according to the configured neighbor cell information.

It can be seen from the foregoing description that, the sending unit delivers the Mc request including the configured neighbor cell information to the terminal, so that the terminal may identify the self-discovered neighbor cell according to the configured neighbor cell information, and obtain the GCI information of the self-discovered neighbor cell through the obtaining unit. In this way, the base station does not need to re-deliver an ANR periodical Mc request. Compared with the prior art, the embodiment of the present invention may decrease the number of delivery times of the Mc request, thus reducing a handover delay.

### Embodiment 7

A terminal is further provided according to an embodiment of the present invention. A structural block diagram of the terminal is as shown in FIG. 7, where the UE includes the following parts:

A receiving unit 710 is configured to receive an Mc unit delivered by a base station, where the Mc request includes configured neighbor cell information and a GCI reporting indication.

The configured neighbor cell information may be a neighbor relation list maintained by the base station, or may be a neighbor PHY_ID maintained by the base station.

The GCI reporting indication includes the following three types:

(1) The GCI reporting indication is all (all), which indicates that the UE reports GCI information of every measured neighbor cell, and the GCI reporting indication of this type may be used at an early stage of network construction.

(2) The GCI reporting indication is a self-discovered neighbor cell (onlyanr), which indicates that the UE only reports GCI information of a self-discovered neighbor cell.

(3) The GCI reporting indication is a best neighbor cell (strongest), which indicates that the UE only reports GCI information of a discovered neighbor cell with best quality.

In this way, the terminal may report the GCI information indicated by the GCI reporting indication to the base station, and the base station does not need to re-deliver an ANR periodical Mc request, thus decreasing the number of delivery times of the Mc request and reducing a handover delay.

An identifying unit 720 is configured to identify a self-discovered neighbor cell according to the configured neighbor cell information. Specifically, if the configured neighbor cell information does not include related information of a discovered neighbor cell (for example, a PHY_ID or GCI information corresponding to the PHY_ID), it indicates that the neighbor cell is a self-discovered neighbor cell.

A first obtaining unit 730 is configured to read a BCH when the GCI reporting indication is the GCI reporting indication of a self-discovered neighbor cell, and obtain GCI information of the self-discovered neighbor cell identified by the identifying unit 320.

A reporting unit 740 is configured to report the obtained GCI information of the neighbor cell to the base station.

It can be seen from the foregoing description that, the receiving unit receives the configured neighbor cell information and the GCI reporting indication that are in the Mc request delivered by the base station, so that the identifying unit may identify the self-discovered neighbor cell according to the configured neighbor cell information, and send the obtained GCI information of the self-discovered neighbor cell to the base station. In this way, the base station does not need to re-deliver the ANR periodical Mc request. Compared with the prior art, the embodiment of the present invention may decrease the number of delivery times of the Mc request, thus reducing a handover delay.

As another embodiment of the present invention, the terminal further includes:

A second obtaining unit 750 is configured to read a BCH when the GCI reporting indication is a GCI reporting indication of all neighbor cells, and obtain GCI information of all measured neighbor cells. Accordingly, the reporting unit 740 is further configured to report the GCI information of all the neighbor cells.

A third obtaining unit 760 is configured to read a BCH when the GCI reporting indication is a GCI reporting indication of an optimal neighbor cell, and obtain GCI information of a measured neighbor cell with the best quality. Accordingly, the reporting unit 740 is further configured to report the GCI information of the neighbor cell with best communication quality.

In this way, through the second obtaining unit 750 and the third obtaining unit 760, the GCI information indicated by the GCI reporting indication may be obtained, and the base station does not need to re-deliver the ANR periodical Mc request, thus decreasing the number of delivery times of the Mc request and reducing the handover delay.

### Embodiment 8

A base station is further provided according to an embodiment of the present invention. Optimally, the base station corresponds to the terminal in the seventh embodiment. Reference may be made to FIG. 6 for a structure of the base station, where the base station includes the following parts:

A sending unit 610 is configured to deliver an Mc request, where the Mc request carries a GCI reporting indication and configured neighbor cell information. The GCI reporting indication may be a GCI reporting indication of all neighbor cells, a GCI reporting indication of a self-discovered neighbor cell, or a GCI reporting indication of an optimal neighbor cell.

An obtaining unit 620 is configured to receive a measurement report reported by the terminal, where the measurement report carries GCI information of a neighbor cell, and the GCI information of a neighbor cell is indicated to be reported in the GCI reporting indication. Specifically, if the GCI reporting indication is the GCI reporting indication of a self-discovered neighbor cell, namely, instructs the terminal to report GCI information of a self-discovered neighbor cell, the obtaining unit 620 obtains the GCI information of a self-discovered neighbor cell, where the GCI information of a self-discovered neighbor cell is reported by the terminal; if the GCI reporting indication is the GCI reporting indication of all neighbor cells, the obtaining unit 620 obtains the GCI information of all neighbor cells measured by the terminal; and if the GCI reporting indication is the GCI reporting indication of a neighbor cell with best quality, the obtaining unit 620 obtains the GCI information of a neighbor cell with the best quality measured by the terminal.

It can be seen from the foregoing description that, the sending unit delivers the Mc request including the configured neighbor cell information and the GCI reporting indication to the terminal, so that the terminal may report the GCI information indicated by the GCI reporting indication to the base station. In this way, the base station does not need to re-deliver an ANR periodical Mc request, thus decreasing the number of delivery times of the Mc request, and reducing a handover delay.

The objectives, technical solutions, and beneficial effects of the present invention are described in further detail through the foregoing specific embodiments. It should be understood that the foregoing descriptions are merely specific embodiments of the present invention, but not intended to limit the protection scope of the present invention. Any modification, equivalent replacement, or improvement made without departing from the spirit and principle of the present invention shall fall within the protection scope of the present invention.

## Claims

1. A neighbor cell information reporting method, comprising:
receiving a measurement configuration request delivered by a base station, wherein the measurement configuration request comprises configured neighbor cell information;
when a discovered neighbor cell is identified as a self-discovered neighbor cell according to the configured neighbor cell information, obtaining global cell identification information of the self-discovered neighbor cell; and
reporting the global cell identification information of the self-discovered neighbor cell to the base station.

2. The method according to claim 1, wherein the identifying the discovered neighbor cell as the self-discovered neighbor cell according to the configured neighbor cell information comprises:
traversing a physical identity of a neighbor cell in the configured neighbor cell information, and identifying the discovered neighbor cell as the self-discovered neighbor cell if a physical identity of the discovered neighbor cell is not found in the configured neighbor cell information.

3. The method according to claim 1, wherein the reporting the global cell identification information of the self-discovered neighbor cell to the base station comprises:
reporting a measurement report carrying the global cell identification information of the self-discovered neighbor cell to the base station, or reporting a measurement report carrying the global cell identification information of the self-discovered neighbor cell and a physical identification of the self-discovered neighbor cell to the base station.

4. A neighbor cell information reporting method, comprising:
receiving a measurement configuration request delivered by a base station, wherein the measurement configuration request comprises configured neighbor cell information and a global cell identification reporting indication;
if the global cell identification reporting indication is a global cell identification reporting indication of a self-discovered neighbor cell, obtaining and reporting global cell identification information of the self-discovered neighbor cell to the base station when a discovered neighbor cell is identified as the self-discovered neighbor cell according to the configured neighbor cell information; or
if the global cell identification reporting indication is a global cell identification reporting indication of all neighbor cells, obtaining and reporting global cell identification information of all discovered neighbor cells to the base station; or
if the global cell identification reporting indication is a global cell identification reporting indication of a neighbor cell meeting a preset condition, obtaining and reporting global cell identification information of the neighbor cell meeting the preset condition to the base station.

5. The method according to claim 4, comprising: reporting the global cell identification information through reporting a measurement report, wherein the measurement report carries global cell identification information of a neighbor cell that needs to be reported, or the measurement report carries global cell identification information of neighbor cell that needs to be reported and a physical identity of a neighbor cell that needs to be reported.

6. A neighbor cell information obtaining method, comprising:
delivering a measurement configuration request, wherein the measurement configuration request carries a global cell identification reporting indication and configured neighbor cell information; and
receiving a measurement report reported by a terminal, and obtaining global cell identification information of a neighbor cell from the measurement report, where the global cell identification information of the neighbor cell is reported by the terminal according to the global cell identification reporting indication.

7. The method according to claim 6, wherein the global cell identification reporting indication comprises:
a global cell identification reporting indication of all neighbor cells, or a global cell identification reporting indication of a self-discovered neighbor cell, or a global cell identification reporting indication of an optimal neighbor cell.

8. A neighbor cell information obtaining method, comprising:
delivering a measurement configuration request, wherein the measurement configuration request carries configured neighbor cell information, so that a terminal judges, according to the configured neighbor cell information, whether a neighbor cell discovered by the terminal is self-discovered neighbor cell information; and
receiving a measurement report reported by the terminal, wherein the measurement report carries global cell identification information of the self-discovered neighbor cell identified by the terminal according to the configured neighbor cell information, or the measurement report carries global cell identification information and a physical identity of the self-discovered neighbor cell identified by the terminal according to the configured neighbor cell information.

9. A terminal, comprising:
a receiving unit, configured to receive a measurement configuration request delivered by a base station, wherein the measurement configuration request comprises configured neighbor cell information and a global cell identification reporting indication;
an identifying unit, configured to identify, according to the configured neighbor cell information, whether a discovered neighbor cell is a self-discovered neighbor cell;
a first obtaining unit, configured to, when the global cell identification reporting indication is a global cell identification reporting indication of the self-discovered neighbor cell, and the identifying unit identifies the discovered neighbor cell as the self-discovered neighbor cell, obtain global cell identification information of the self-discovered neighbor cell; and
a reporting unit, configured to report the global cell identification information of the self-discovered neighbor cell to the base station, or configured to report the global cell identification information and a physical identity of the self-discovered neighbor cell.

10. The terminal according to claim 9, further comprising:
a second obtaining unit, configured to obtain global cell identification information of all discovered neighbor cells when the global cell identification reporting indication is a global cell identification reporting indication of all neighbor cells,
wherein the reporting unit is further configured to report the global cell identification information of all the neighbor cells.

11. The terminal according to claim 9, further comprising:
a third obtaining unit, configured to obtain global cell identification information of a neighbor cell with best communication quality when the global cell identification reporting indication is a global cell identification reporting indication of an optimal neighbor cell,
wherein the reporting unit is further configured to report the global cell identification information of the neighbor cell with the best communication quality.

12. A terminal, comprising:
a receiving unit, configured to receive a measurement configuration request delivered by a base station, wherein the measurement configuration request comprises configured neighbor cell information;
an identifying unit, configured to identify, according to the configured neighbor cell information, whether a discovered neighbor cell is a self-discovered neighbor cell;
an obtaining unit, configured to, when the identifying unit identifies the discovered neighbor cell as the self-discovered neighbor cell, obtain global cell identification information of the self-discovered neighbor cell; and
a reporting unit, configured to report the global cell identification information of the self-discovered neighbor cell to the base station, or report the global cell identification information and a physical identity of the self-discovered neighbor cell to the base station.

13. A neighbor cell information obtaining device, comprising:
a sending unit, configured to deliver a measurement configuration request, wherein the measurement configuration request carries a global cell identification reporting indication; and
an obtaining unit, configured to receive a measurement report reported by a terminal, wherein the measurement report carries global cell identification information of a neighbor cell, wherein the global cell identification information of the neighbor cell is reported by the terminal according to the global cell identification reporting indication, or the measurement report carries global cell identification information and a physical identity of a neighbor cell, wherein the global cell identification information and the physical identity of the neighbor cell are reported by the terminal according to the global cell identification reporting indication.

14. The device according to claim 13, wherein the global cell identification reporting indication comprises:
a global cell identification reporting indication of all neighbor cells, or a global cell identification reporting indication of a self-discovered neighbor cell, or a global cell identification reporting indication of an optimal neighbor cell.

15. A neighbor cell information obtaining device, comprising:
a sending unit, configured to deliver a measurement configuration request, wherein the measurement configuration request carries configured neighbor cell information; and
an obtaining unit, configured to receive a measurement report reported by a terminal, wherein the measurement report carries global cell identification information of a self-discovered neighbor cell identified by the terminal according to the configured neighbor cell information, or the measurement report carries global cell identification information and a physical identity of a self-discovered neighbor cell identified by the terminal according to the configured neighbor cell information.
